Europäisches Patentamt

European Patent Office

Office européen des brevets

(19)

(11)   EP 0 686 679 B1

(12)   **FASCICULE DE BREVET EUROPEEN**

(45) Date de publication et mention
de la délivrance du brevet:
**12.04.2000   Bulletin 2000/15**

(51) Int Cl.⁷: **C09D 183/04**, D21H 27/00

(21) Numéro de dépôt: **95420141.4**

(22) Date de dépôt: **02.06.1995**

(54) **Composition silicone réticulable ou réticulée antiadhérente et imprimable**

Bedruckbare vernetzbare Silikontrennmittelzusammensetzung

Printable crosslinked (or crosslinkable) silicone release composition

(84) Etats contractants désignés:
**AT BE CH DE DK ES FR GB GR IE IT LI LU NL PT SE**

(30) Priorité:  **07.06.1994  FR 9407160**

(43) Date de publication de la demande:
**13.12.1995   Bulletin 1995/50**

(73) Titulaire: **RHODIA CHIMIE**
**92408 Courbevoie Cédex (FR)**

(72) Inventeurs:
• **Lievre, André**
**F-69230 Saint-Genis-Laval (FR)**

• **Mirou, Christian**
**F-69005 Lyon (FR)**

(74) Mandataire: **Fleurance, Raphael et al**
**Cabinet Plasseraud**
**Le Danica B**
**21, avenue G. Pompidou**
**69486 Lyon Cedex (FR)**

(56) Documents cités:
**EP-A- 0 117 607        EP-A- 0 169 098**
**EP-A- 0 307 578        EP-A- 0 385 342**
**DE-A- 2 449 085        US-A- 4 617 239**

EP 0 686 679 B1

**Description**

Le domaine de l'invention est celui des compositions silicones réticulables ou réticulées, susceptibles d'être utilisées, notamment, pour former un revêtement ou film antiadhérent pour support fibreux ou non, par exemple en papier ou analogue, ou en polymère naturel ou synthétique (film).

Les polyorganosiloxanes sont connus pour leur aptitude à rendre antiadhérentes des surfaces de supports divers, (e.g. papier, tissu, film polymère ou autres). Les traitements antiadhérents sont faciles à effectuer avec les silicones, car ces derniers peuvent se présenter sous forme de résine, solution ou émulsion liquide réticulable, qui sont facilement applicables et étalables sur des supports, à cadence et à échelle industrielle. C'est ainsi que les compositions silicones sont, par exemple, utilisées comme agent de démoulage, notamment dans la confection des pneus et dans l'injection de matières plastiques, ou bien encore pour le revêtement des moules métalliques utilisés en pâtisserie ou des filets dans les fours à pain ou enfin pour la réalisation de papier protecteur d'adhésifs (étiquette, papier décoratif), de papier intercalaire pour la manipulation des masses collantes (stratifié, caoutchouc cru), de papier antiadhérent pour la cuisson des pâtisseries. A titre illustratif, on peut indiquer que les demandes ou brevets US-A-4 347 346, EP-A-0 219 720, EP-A-0 454 130 et EP-A-0 523660 décrivent des polyorganosiloxanes, destinés à être utilisés dans l'application antiadhérence papier.

Les silicones réticulables connues et utilisées pour l'enduction en couche mince de supports e.g. papier, tirent en partie leur fonctionnalité antiadhérente de leur nature hydrofuge. Mais, ce défaut d'affinité pour l'eau a pour conséquence que les encres d'impression, qui, pour la plupart sont hydrophiles, ne peuvent ni accrocher ni mouiller sur des revêtements silicones antiadhérents.

Pour tenter de remédier à cette lacune, il a été proposé d'incorporer, dans les compositions silicones antiadhérentes, des additifs et des charges, qui seraient susceptibles de permettre de répondre, à la fois, à l'exigence d'antiadhérence et à l'exigence "d'imprimabilité". C'est ainsi que, par exemple, la demande de brevet JP-A-0 503 3296 divulgue des compositions de revêtement papier contenant des polyorganosiloxanes, des copolymères latex de styrène-butadiène et des pigments. Les qualités d'impression de tels revêtements silicones chargés de latex, restent encore peu satisfaisantes. En outre, l'addition d'une charge de latex amène une sensibilité thermique, qui est particulièrement pénalisante pour le revêtement. En effet, cela se traduit par une dégradation des propriétés antiadhérentes à des températures relativement basses : le support enduit devient thermocollant.

Dans cet état de la technique, l'un des objectifs essentiels de la présente invention est de remédier aux inconvénients visés ci-dessus, en fournissant une composition silicone réticulable ou réticulée, qui apporte une solution satisfaisante au dilemme antiadhérence/imprimabilité, traditionnellement rencontré dans les revêtements silicones antiadhérents.

Un autre objectif de l'invention est de fournir une composition silicone réticulable ou réticulée apte à former un revêtement antiadhérent et imprimable qui ne soit pas thermosensible.

Un autre objectif de l'invention est de fournir une composition silicone réticulable ou réticulée apte à former un revêtement antiadhérent et imprimable qui soit également hydrofuge et qui ait non seulement une bonne tenue à l'eau, mais aussi une bonne tenue aux graisses.

Un autre objectif de l'invention est de fournir une composition silicone réticulable ou réticulée pour revêtement antiadhérent et imprimable, qui soit aisément applicable, par exemple par étalement, sur les supports à traiter, de façon à satisfaire aux contraintes industrielles de rentabilité et de production en masse.

Un autre objectif de l'invention est de fournir une composition silicone réticulable ou réticulée pour revêtement antiadhérent imprimable, qui soit d'un coût de revient raisonnable.

Un autre objectif de l'invention est de fournir des supports traités à l'aide des compositions visées ci-dessus.

Pour atteindre ces objectifs, parmi d'autres, la Demanderesse a eu le mérite de mettre en évidence, après de nombreuses études et essais, que la solution aux problèmes évoqués ci-avant, passe par l'incorporation dans la composition silicone réticulable ou réticulée considérée d'un additif du type polymère hydrosoluble choisi parmi une classe particulière d'alcools polyvinyliques.

Ainsi, la présente invention concerne donc, tout d'abord, une composition silicone réticulable, susceptible d'être utilisée comme revêtement antiadhérent et imprimable, pour support fibreux ou non, du type de celles comprenant au moins un polyorganosiloxane et au moins un alcool polyvinylique (APV$_1$) ayant un indice d'ester (I.E) supérieur ou égal à 80, de préférence à 100 et plus préférentiellement encore compris entre 120 et 200,

    caractérisée

- en ce que cet APV$_1$ présente une viscosité dynamique type ($\eta_{dt}$) inférieure à 12 mPa.s, et de préférence à 10 mPa.s,
- et en ce que le ratio pondéral sur sec de la fraction polyorganosiloxane sur la fraction APV s'établit entre 0,5 et 10, de préférence entre 1 et 5 et plus préférentiellement encore entre 1,5 et 3,5,

    avec la condition selon laquelle l'APV$_1$ est mélangé avec au moins un autre alcool polyvinylique dans le cas où la fraction polyorganosiloxane comporte au moins un polydiorganosiloxane portant à chaque extrémité de la chaîne au moins deux groupes condensables ou hydrolysables, ou un seul groupe hydroxyle, les molécules dudit (ou desdits) polydiorganosiloxane(s) étant aptes à réagir entre elles et/ou avec celles d'au moins un agent réticulant de type organosilane, comportant au moins trois groupes condensables ou hydrolysables quand le polydiorganosiloxane est à extrémités hydroxyles et/ou de type polyhydrogénosiloxane, en présence d'un système catalytique comprenant une quantité catalytiquement efficace d'au moins un catalyseur composé d'au moins un métal appartenant au groupe de l'étain, et selon un mécanisme de polycondensation.

Les alcools polyvinyliques (APV) sont des composés obtenus indirectement à partir de leur esters, par hydrolyse en milieu aqueux ou par alcoolyse en milieu anhydre. En pratique, les esters utilisés comme matière première sont couramment les acétates de polyvinyles. Généralement, la lyse des esters conduisant aux APV n'est pas complète. Il reste dans la molécule des radicaux acyles dont la proportion influe sur les propriétés de l'APV, notamment sur sa solubilité. Un mode de définition des APV repose donc sur l'indication de l'indice d'ester (I.E) qui est inversement proportionnel au taux d'hydrolyse. La mesure de l'I.E. s'effectue de manière connue en soi, par neutralisation de l'acidité éventuelle de l'alcool polyvinylique, saponification des groupes acyles et titrage de l'excès d'alcaline saponification.

Les alcools polyvinyliques selon l'invention sont également caractérisés par leur degré de condensation que l'on peut évaluer par la détermination de la viscosité dynamique d'une solution type (désignée par $\eta_{dt}$, dans le présent exposé), sachant que cette variable est d'autant plus élevée que le degré de condensation est plus grand.

La viscosité $\eta_{dt}$ correspond au coefficient de viscosité dynamique d'une solution aqueuse d'APV à 4 % poids, mesuré à une température de $20 \pm 5°C$ à l'aide d'un viscosimètre d'Ostwald.

Les compositions selon l'invention permettent d'obtenir, après enduction, des surfaces antiadhérentes imprimables et hydrofuges. De plus, les revêtements réticulés ainsi réalisés sont relativement insensibles à la température. Ils bénéficient, en outre, d'une bonne imprimabilité et d'une antiadhérence satisfaisante. Enfin, l'alcool polyvinylique mis en oeuvre ne grève pas la composition silicone sur le plan économique.

Sans que cela ne soit limitatif, on peut donner des exemples d'alcools polyvinyliques procurant des résultats satisfaisants au regard des objectifs visés par l'invention: ces APV sont ceux dont l'$\eta_{dt}$ est compris entre 5 et 10 mPa. s et dont l'I.E. est compris entre 130 et 150.

Les acétates de polyvinyle sont des APV classiques, utilisables pour l'invention.

Suivant une variante avantageuse de l'invention, la composition contient un mélange de différents alcools polyvinyliques, de préférence un mélange d'alcools polyvinyliques tels que définis ci-dessus (APV$_1$) et d'alcools polyvinyliques (APV$_2$) dont l'I.E. est supérieur ou égal à 10 de préférence compris entre 10 et 150, et plus préférentiellement encore entre 15 et 50 et dont l'$\eta_{dt}$, est inférieur ou égal à 50 mPa.s, de préférence, à 30 mPa.s et plus préférentiellement encore à 10 mPa.s. Avantageusement, les proportions en APV$_1$ et APV$_2$ dans le mélange sont les suivantes :

APV$_1$ de 40 à 100 parties en poids, de préférence de 50 à 100 parties en poids ;

APV$_2$ de 0 à 60 parties en poids de préférence de 0 à 50 parties en poids.

Une telle variante permet d'obtenir un bon compromis entre la tenue aux graisses et la tenue à l'eau, sans sacrifier à l'antiadhérence et à l'imprimabilité.

Comme cela ressort de ce qui précède, la composition silicone selon l'invention comprend, entre autres, une fraction polyorganosiloxane et une fraction alcool polyvinylique.

Dans le cadre de l'invention, il est apparu préférable que le ratio pondéral sur sec

$$\frac{\textit{Fraction polyorganosiloxane}}{\textit{Fraction APV}}$$

s'établisse entre 0,5 et 10, de préférence entre 1 et 5 et plus préférentiellement encore entre 1,5 et 3,5.

S'agissant de la fraction polyorganosiloxane, elle peut être constituée par un polymère ou un mélange de polymères silicones réticulables, de toutes natures appropriées et connues en elles-mêmes, notamment pour les applications en antiadhérence et/ou hydrofugation.

Cette fraction polyorganosiloxane peut ainsi être constituée, par exemple, par au moins l'une des fractions a, b et c décrites ci-après.

La fraction polyorganosiloxane ∗ a ∗ comprend au moins un polydiorganosiloxane portant à chaque extrémité de la chaîne au moins deux groupes condensables ou hydrolysables, ou un seul groupe hydroxyle, les molécules dudit (ou desdits) polydiorganosiloxane(s) étant aptes à réagir entre elles et/ou avec celles d'au moins un agent réticulant de type organosilane, comportant au moins trois groupes condensables ou hydrolysables quand le polydiorganosiloxane est à extrémités hydroxyles et/ou de type polyhydrogénosiloxane, en présence d'un système catalytique comprenant une quantité catalytiquement efficace d'au moins un catalyseur composé d'au moins un métal appartenant au groupe de l'étain, et selon un mécanisme de polycondensation.

Plus précisément, ces polyorganosiloxanes du type polycondensation peuvent être obtenus à partir e.g., de diorganopolysiloxanes α - ω dihydroxylées et de diorganopolysiloxanes hydrogénés.

La fraction polyorganosiloxane ∗ b ∗ est constituée notamment par au moins un polyorganosiloxane réticulable par voie cationique, grâce à des substituants fonctionnels, de préférence de type époxy et/ou vinyloxy.

De tels silicones sont du type de ceux définis dans les demandes de brevet français au nom de la Demanderesse N° **92 03 441** et **93 02749,** qui sont inclues par référence dans le présent exposé, pour la description des polyorganosiloxanes réticulables par voie cationique.

Un autre exemple de fraction polyorganosiloxane qui correspond à une mise en oeuvre avantageuse de l'invention est donné par la fraction ∗ c ∗ constituée notamment par :

- au moins un polyorganosiloxane (**I**) présentant, par molécule, au moins deux groupes alcényles en $C_2$-$C_6$ liés au silicium,
- au moins un polyorganosiloxane (**II**) présentant, par molécule, au moins trois atomes d'hydrogène liés au silicium,
- et par un système catalytique comprenant une quantité catalytiquement efficace d'au moins un catalyseur (**III**) composé d'au moins un métal appartenant au groupe du platine,

ces polyorganosiloxanes étant réticulables par polyaddition.

Le polyorganosiloxane (**I**) est pondéralement l'un des constituants essentiels de la composition selon l'invention. Avantageusement, Il s'agit d'un produit présentant des motifs de formule :

$$T_a Z_b SiO_{\frac{4-(a+b)}{2}} \qquad (I.1)$$

dans laquelle :

- T est un groupe alcényle, de préférence vinyle ou alkyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3,

éventuellement au moins une partie des autres motifs sont des motifs de formule moyenne :

$$Z_c SiO_{\frac{4-c}{2}} \qquad (I.2)$$

dans laquelle Z a la même signification que ci-dessus et c a une valeur comprise entre 0 et 3, par exemple entre 1 et 3.

Il est avantageux que ce polydiorganosiloxane ait une viscosité au moins égale à 10 mPa.s, de préférence à 1000 mPa.s et plus préférentiellement encore comprise entre 5.000 et 200.000 mPa.s. A titre d'exemple de composé (**I**), on peut citer le polydiméthylsiloxane.

Le polyorganosiloxane (**I**) peut être uniquement formé de motifs de formule (**I.1**) ou peut contenir, en outre, des motifs de formule (**I.2**). De même, il peut présenter une structure linéaire ramifiée cyclique ou en réseau. Son degré de polymérisation est, de préférence, compris entre 2 et 5 000.

Z est généralement choisi parmi les radicaux méthyle, éthyle et phényle, 60 % molaire au moins des radicaux Z étant des radicaux méthyle.

Des exemples de motifs siloxyle de formule (**I.1**) sont le motif vinyldiméthylsiloxane, le motif vinylphénylméthylsiloxane et le motif vinylsiloxane.

Des exemples de motifs siloxyle de formule (**I.2**) sont les motifs $SiO_{4/2}$, diméthylsiloxane, méthylphénylsiloxane, diphénylsiloxane, méthylsiloxane et phénylsiloxane.

Des exemples de polyorganosiloxanes (**I**) sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Le polyorganosiloxane (**II**) est de préférence du type de ceux comportant des motifs siloxyle de formule :

$$H_d L_e SiO_{\frac{4-(d+e)}{2}} \qquad (II.1)$$

**4**

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- d est 1 ou 2, e est 0, 1 ou 2, d + e a une valeur comprise entre 1 et 3,
- éventuellement, au moins une partie des autres motifs étant des motifs de formule moyenne :

$$L_g SiO_{\frac{4-g}{2}} \qquad (II.2)$$

dans laquelle L a la même signification que ci-dessus et g a une valeur comprise entre 0 et 3.

La viscosité dynamique $\eta_d$ de ce polyorganosiloxane (**II**) ≥ à 5 de préférence à 10 et, plus préférentiellement encore, est comprise entre 20 et 1000 mPa.s.

A titre d'exemples de polyorganosiloxane (**II**), on peut citer le poly(diméthylsiloxane) (méthylhydrogénosiloxy) $\alpha$, $\omega$ diméthylhydrogénosiloxane.

Le polyorganosiloxane (**II**) peut être uniquement formé de motifs de formule (**II.1**) ou comporte en plus des motifs de fomule (**II.2**).

Le polyorganosiloxane (**II**) peut présenter une structure linéaire ramifiée cyclique ou en réseau. Le degré de polymérisation est supérieur ou égal à 2. Plus généralement, il est inférieur à 5 000.

Le groupe L a la même signification que le groupe Z ci-dessus.

Des exemples de motifs de formule (**II.1**) sont :

$$H(CH_3)_2SIO_{1/2}, HCH_3SiO_{2/2}, H(C_6H_5)SiO_{2/2}$$

Les exemples de motifs de formule (**II.2**) sont les mêmes que ceux donnés plus haut pour les motifs de formule (**I.2**).

Des exemples de polyorganosiloxane (**II**) sont :

- les diméthylpolysiloxanes à extrémités hydrogénodiméthylsilyle,
- les copolymères à motifs diméthyl-hydrogénométhylpolysiloxanes (diméthyl) à extrémités triméthylsilyle,
- les copolymères à motifs diméthyl-hydrogénométhylpolysiloxanes à extrémités hydrogénodiméthylsilyle,
- les hydrogénométhylpolysiloxanes à extrémités triméthylsilyle,
- les hydrogénométhylpolysiloxanes cycliques.

Le rapport du nombre d'atomes d'hydrogène lié au silicium dans le polyorganosiloxane (**I**) sur le nombre de groupes à insaturation alcényle de le polyorganosiloxane (**II**) est compris entre 0,4 et 10, de préférence entre 0,6 et 5.

Les bases de compositions silicones polyaddition peuvent ne comporter que des polyorganosiloxane (**I**) et (**II**) linéaires comme, par exemple, celles décrites dans les brevets : US-A-3 220 972, US-A-3 697 473 et US-A4 340 709 ou comporter à la fois des polyorganosiloxanes (**I**) et (**II**) ramifiés ou en réseau, comme par exemple celles décrites dans les brevets : US-A-3 284 406 et US-A-3 434 366.

Les catalyseurs (**III**) sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (**III**), calculée en poids de platine-métal, est généralement comprise entre 2 et 400 ppm, de préférence entre 5 et 200 ppm basés sur le poids total des polyorganosiloxanes (**I**) et (**II**).

Avantageusement, le système catalytique de cette composition élastomère silicone de type polyaddition, comprend au moins un ralentisseur de la réaction d'addition (inhibiteur de réticulation), choisi parmi les composés suivants :

- polyorganosiloxanes, avantageusement cycliques et substitués par au moins un alcényle, le tétraméthylvinyltétrasiloxane étant particulièrement préféré,
- la pyridine,

- les phosphines et les phosphites organiques,
- les amides insaturés,
- les maléates alkylés
- et les alcools acétyléniques.

Ces alcools acétyléniques, (Cf. **FR-B-1 528 464** et **FR-A-2 372 874**), qui font partie des bloqueurs thermiques de réaction d'hydrosilylation préférés, ont pour formule :

$$R - (R') C (OH) - C \equiv CH$$

formule dans laquelle,

. R est un radical alkyle linéaire ou ramifié, ou un radical phényle ;
. R' est H ou un radical alkyle linéaire ou ramifié, ou un radical phényle ;

les radicaux R, R' et l'atome de carbone situé en $\alpha$ de la triple liaison pouvant éventuellement former un cycle ;
le nombre total d'atomes de carbone contenu dans R et R' étant d'au moins 5, de préférence de 9 à 20.
Lesdits alcools sont, de préférence, choisis parmi ceux présentant un point d'ébullition supérieur à 250° C. On peut citer à titre d'exemples :

. l'éthynyl-1-cyclohexanol 1;
. le méthyl-3 dodécyne-1 ol-3 ;
. le triméthyl-3,7,11 dodécyne-1 ol-3
. le diphényl-1,1 propyne-2 ol-1;
. l'éthyl-3 éthyl-6 nonyne-1 ol-3;
. le méthyl-3 pentadécyne-1 ol-3.

Ces alcools $\alpha$-acétyléniques sont des produits du commerce.
Un tel ralentisseur est présent à raison de 3 000 ppm au maximum, de préférence à raison de 100 à 2000 ppm par rapport au poids total des organopolysiloxanes (**I**) et (**II**).
Avantageusement, la composition selon l'invention se présente sous forme de dispersion aqueuse réticulable comprenant:

- la fraction polyorganosiloxane constituée par une émulsion du type huile dans eau éventuellement stabilisée par au moins un tensioactif choisi parmi les tensioactifs ioniques ou non et leurs mélanges,
- la fraction polymère hydrosoluble,
- un système catalytique de réticulation,
- éventuellement une charge minérale,
- et éventuellement au moins un agent anti-mousse.

La charge minérale facultative est de préférence minérale. Elle peut être constituée par des produits choisis parmi les matières siliceuses ou non.
S'agissant des matières siliceuses, elles peuvent jouer le rôle de charge renforçante ou semi-renforçante.
Les charges siliceuses renforçantes sont choisies parmi les silices colloïdales, les poudres de silice de combustion et de précipitation ou leur mélange.
Ces poudres présentent une taille moyenne de particule généralement inférieure à 0,1 $\mu$m et une surface spécifique BET supérieure à 50 m$^2$/g, de préférence comprise entre 150 et 350 m$^2$ /g.
Les charges siliceuses semi-renforçantes telles que des terres de diatomées ou du quartz broyé, peuvent être également employées.
En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 $\mu$m et une surface BET inférieure à 100 m$^2$/g.
Sur le plan pondéral, on préfère mettre en oeuvre une quantité de charge comprise entre 20 et 50, de préférence entre 25 et 35 % en poids par rapport à l'ensemble des constituants de la composition.

L'agent anti-mousse éventuellement ajouté à la composition est sélectionné, e.g., parmi les anti-mousses à base de silicones, tels que le RHODORSEAL® 70414 commercialisé par la demanderesse.

Avantageusement, on prévoit un coadditif de type latex qui est introduit dans la fraction polymère hydrosoluble pour agir en association avec ce dernier. Comme exemple de latex susceptible de convenir, on peut citer les copolymères styrène-butadiène.

Suivant une disposition intéressante de l'invention la proportion d'eau de la susdite dispersion aqueuse est supérieure ou égale à 50 % en poids, de préférence à 70 % en poids et plus préférentiellement encore à 90 % en poids.

De manière connue en soi, la composition élastomère silicone peut être également additionnée de divers additifs classiques comme par exemple les colorants.

Selon un autre de ces aspects et dans le cas où les polyorganosiloxanes mis en oeuvre sont du type polyaddition, la présente invention est relative à un système précurseur, au moins bicomposant, de la composition silicone élastomère décrite supra. Dans ce système, les parties réactives réticulables de la composition silicone ne sont pas en présence. Avantageusement, un tel système précurseur se présente en deux parties **A** et **B** distinctes, destinées à être mélangées pour former la composition, l'une de ces parties **A** ou **B** comprenant le système catalytique (**III**) et une seule espèce (**I**) ou (**II**) de polyorganosiloxane.

Ainsi, ce bicomposant est constitué

- soit d'une partie **A** comprenant la fraction polyorganosiloxane en mélange avec la fraction polymère hydrosoluble et d'une partie **B** comprenant le système catalytique éventuellement complété par une partie de la fraction polyorganosiloxane non réactive à elle seule en présence du système catalytique
- soit d'une partie **A** comprenant la fraction polyorganosiloxane en tout ou partie et d'une partie **B** formée par la fraction polymère hydrosoluble et le système catalytique et éventuellement complétée par une partie de la fraction polyorganosiloxane non réactive à elle seule en présence du système catalytique.

Pour obtenir la dispersion silicone aqueuse réticulable de l'invention, on prépare tout d'abord une émulsion aqueuse à partir de la fraction polyorganosiloxane et d'eau. On mélange ensuite cette émulsion avec la fraction polymère hydrosoluble et, juste avant d'appliquer la dispersion sur la surface du support à revêtir, avec le système catalytique, de manière à enclencher le processus de réticulation qui se poursuit pendant et après l'enduction.

Les faisceaux d'électrons et les rayonnements électromagnétiques (UV) ou thermiques (IR) constituent des moyens, parmi d'autres, susceptibles d'être mis en oeuvre pour initier et/ou favoriser la réticulation.

Un autre objet de l'invention est l'utilisation de la composition élastomère ou de son système précurseur décrit ci-dessus, pour le revêtement ou l'enduction de support fibreux ou non, de préférence fibreux et plus préférentiellement encore de supports en papier ou analogue, ce revêtement étant présent à raison d'au plus 1,00 g de polyorganosiloxane par $m^2$ de support, de préférence d'au plus 0,9 g/m$^2$, et plus préférentiellement encore d'au plus 0,50 g/m$^2$.

Selon d'autres alternatives, ce support peut être constitué de polymères synthétiques ou naturels tels que les polyéthylènes, les polypropylènes ou les polyesters.

Le support peut se présenter sous forme de film (couche) mince, de tissu ou d'autres articles souple, ainsi que sous forme d'objets plus compacts et massifs (e.g. moules....)

Suivant une application privilégiée de la composition de l'invention, le support fibreux ou non comprend sur au moins une de ses faces un revêtement anti-adhérent et imprimable constitué par la composition silicone sous forme réticulée, telle que décrite supra.

Plus précisément, ce support peut comporter le revêtement antiadhérent et imprimable sur l'une de ses faces et un revêtement adhésif sur la face opposée. Dans cette réalisation, on envisage, notamment, des articles tels que des étiquettes, des feuilles, des rubans ou similaires autoadhésifs qui ont pour propriétés d'être imprimables, hydrofuges et collables les uns sur les autres, de manière réversible. Cette dernière caractéristique est particulièrement intéressante pour les étiquettes autocollantes, car elle permet la suppression des supports antiadhésifs classiques.

Il va de soi que l'invention n'est pas limitée aux supports à faces opposées adhésive/antiadhérente mais englobe également les supports revêtus uniquement d'une couche d'antiadhésif imprimable, qui peuvent être imprimés et utilisés tels quels, par exemple, comme moyens de protection.

Un autre objet de l'invention est l'utilisation d'alcools polyvinyliques comme agent d'amélioration de l'imprimabilité, d'une composition silicone réticulable ou réticulée destinée à être utilisée pour former un revêtement antiadhérent et imprimable, pour supports fibreux ou non, de préférence en papier ou en polymère synthétique.

Les exemples, qui suivent, de préparation de la composition silicone considérée et de son application comme revêtement antiadhérent, imprimable et hydrofuge de supports papier permettront de mieux comprendre l'invention et de faire ressortir ses avantages et ses variantes de réalisation. Les performances de la composition de l'invention seront mises en exergue par des tests comparatifs.

**EXEMPLES:**

**EXEMPLE 1: PRÉPARATION DE DISPERSIONS SILICONES AQUEUSES D'ENDUCTION SELON L'INVENTION**

Dans un réacteur équipé d'un agitateur à hélice, on charge :

**A/** 100 parties en poids :

▷ d'une émulsion aqueuse (extrait sec = 40 % poids) préparée de manière connue en soi, à partir d'une huile polydiméthylsiloxane (**I**) contenant 1 % en poids de motifs vinyls, et d'une huile polyhydrogénométhylsiloxane (**II**) contenant 30 % en poids de motifs SiH (ratio molaire SiH/SiVi $\geq$ 1),
▷ de 2 g d'un alcool polyvinylique émulsifiant d'indice d'ester et de viscosité donnés $\eta_{dt}$,
▷ et d'eau.

**B/** 12 parties en poids d'un catalyseur au platine type Karstedt (le taux de Pt métal par rapport aux huiles silicones est de l'ordre de 100 ppm).

On mélange A et B par agitation pendant 5 minutes et on rajoute progressivement 190 parties en poids d'une solution aqueuse à 10 % en poids d'alcool polyvinylique.

On rajoute ensuite 1929 parties d'eau de manière à obtenir un extrait sec d'environ 3% en poids.

Plusieurs échantillons de composition silicone d'enduction ont été ainsi obtenues: témoin négatif (T) sans polymère hydrosoluble et échantillons 1 à 8 différent les uns des autres, selon la nature de l'APV et la densité de dépôt.

Trois types d'APV ont été mis en oeuvre :

→ APV$_0$ $\eta_{dt}$ = 30 / I.E. = 5
→ APV$_1$ $\eta_{dt}$ = 5 / I.E. = 140
→ APV$_2$ $\eta_{dt}$ = 8 / I.E. = 20

Ces APV sont des produits de marque RHODOVIOL® commercialisés par la demanderesse.

**EXEMPLE 2 : APPLICATION DES DISPERSIONS DE L'EXEMPLE 1 SUR DES SUPPORTS PAPIER**

L'enduction a été réalisée, à froid, à l'aide d'une machine pilote **ROMOTEC**, équipée d'une tête d'enduction de type "barre de Meyer".

Après enduction, la réticulation est effectuée par passage dans un four de 3 x 2 m de longueur, régulé à 150° C.

La vitesse machine étant de 50 m /mn, le revêtement silicone réticule durant 7,2 s dans le four. La température de surface du papier est d'environ 110°C.

Les papiers traités sont testés après un vieillissement de 9 jours dans une salle conditionnée à 23° C et 50 % d'HR.

Le papier kraft blanchi mis en oeuvre a une largeur de 400 mm et un grammage de 50 g/m$^2$.

**EXEMPLE 3 : TESTS DES PAPIERS DE L'EXEMPLE 2**

*3.1. Méthodes analytiques*

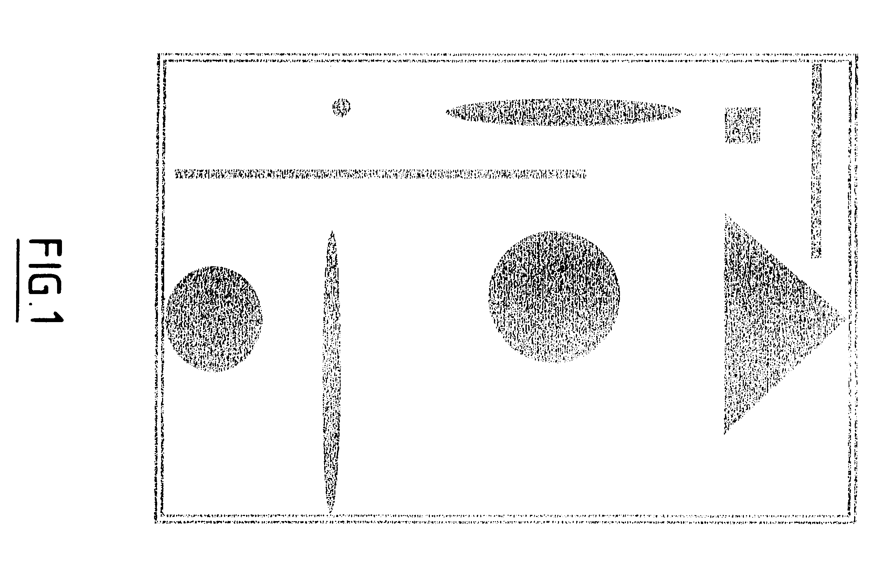

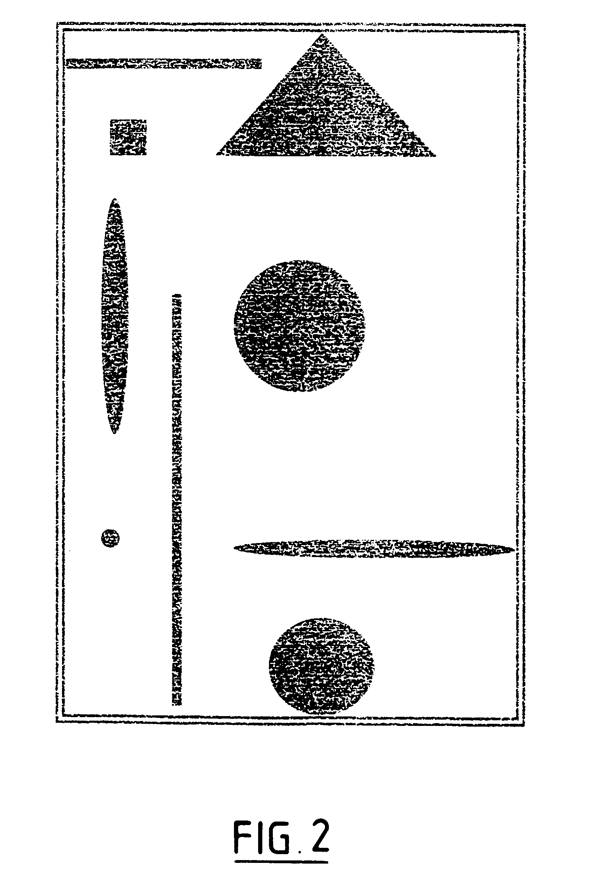

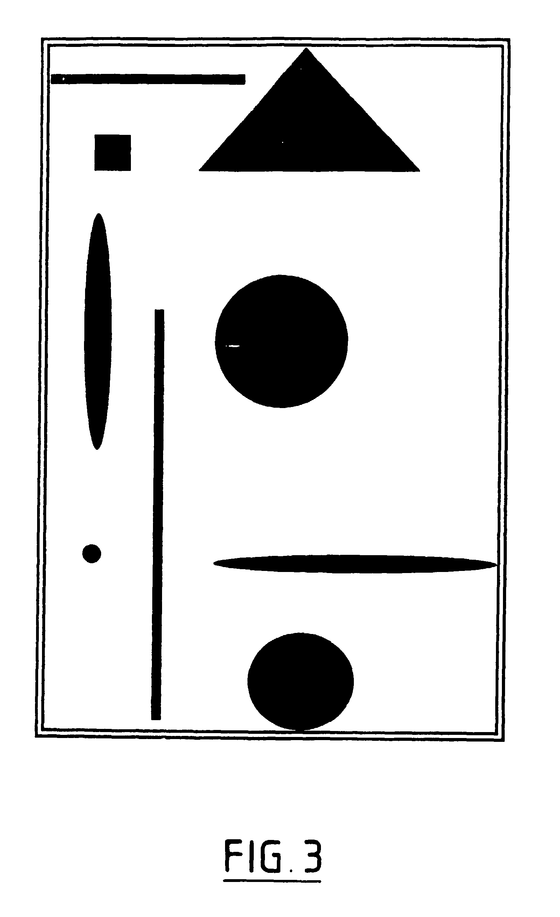

→ Le dépôt de surface total en silicone est mesuré par fluorescence X et est exprimée en g de polyorganosiloxane sec déposé par m$^2$ de papier.
→ On évalue l'antiadhérence des revêtements silicones par mesure des forces de décollement d'un ruban adhésif de marque TESA® 4651, à l'aide d'un dynamomètre de type INSTRON, selon la méthode Finat N° 3.
Les forces sont exprimées en gf/ cm. Dans ce test l'antiadhérence est acceptable si elle est $\leq$ 500 gf, ce qui correspond à: + et bonne si elle est $\leq$ 200 gf, ce qui correspond à : ++.
→ L'imprimabilité a été évaluée à l'aide d'une imprimante de type "jet d'encre" de marque DESKJET PLUS ® 500 HEWLETT PACKARD. L'imprimabilité est appréciée selon une gamme de trois étalons correspondant aux figures 1 à 3 annexées :

**Fig. 1** = médiocre, annoté

**Fig. 2** = moyen, annoté +
**Fig. 3** = excellent, annoté + +

*3.2. Conditions des tests et résultats*

Cf. tableau ci-après.

| Echantillons | T | 1 | 2 | 3 | 4 | 5 | 6 | 7 | 8 |
|---|---|---|---|---|---|---|---|---|---|
| FORMULATION (en parties en poids) . Emulsion de polyorganosiloxanes (I) et (II) | 100 | 100 | 100 | 100 | 100 | 100 | 100 | 100 | 100 |
| . Système catalytique (III) | 12 | 12 | 12 | 12 | 12 | 12 | 12 | 12 | 12 |
| . eau | 1000 | 1000 | 1000 | 1000 | 1000 | 1000 | 1000 | 1000 | 1000 |
| . $APV_0$ 30/5 | | 19 | 19 | 19 | | | | | |
| . $APV_1$ 5/140 | 0 | 0 | 0 | 0 | 19 | 19 | 19 | 19 | 19 |
| . $APV_2$ 8/20 | 0 | 0 | 0 | 0 | 0 | 0 | 0 | 19 | 19 |
| Taux de dépôt en g de fraction polyorganosiloxane / $m^2$ de papier | 0,30 | 0,55 | 0,42 | 0,20 | 0,84 | 0,54 | 0,28 | 0,51 | 0,23 |
| ANTIADHERENCE gf/cm | + + | + + | + + | + + | + + | + + | + + | + | + |
| IMPRIMABILITE | - | - | - | - | + | + + | + + | + | + + |

EP 0 686 679 B1

**Revendications**

1. Composition silicone réticulable ou réticulée, susceptible d'être utilisée pour former un revêtement antiadhérent et imprimable pour supports fibreux ou non, du type de celles comprenant au moins un polyorganosiloxane et au moins un alcool polyvinylique (APV$_1$) ayant un indice d'ester (I.E.) supérieur ou égal à 80, de préférence à 100 et plus préférentiellement encore compris entre 120 et 200,
   caractérisée

   - en ce que cet APV$_1$ présente une viscosité dynamique type ($\eta_{dt}$) inférieure à 12 mPa.s, et de préférence à 10 mPa.s, $\eta_{dt}$ correspondant au coefficient de viscosité dynamique d'une solution aqueuse d'APV à 4 % poids, mesuré à une température de 20 ± 5° C à l'aide d'un viscosimètre d'Ostwald,
   - en ce que le ratio pondéral sur sec de la fraction polyorganosiloxane sur la fraction APV s'établit entre 0,5 et 10, de préférence entre 1 et 5 et plus préférentiellement encore entre 1,5 et 3,5,

   avec la condition selon laquelle l'APV$_1$ est mélangé avec au moins un autre alcool polyvinylique dans le cas où la fraction polyorganosiloxane comporte au moins un polydiorganosiloxane portant à chaque extrémité de la chaîne au moins deux groupes condensables ou hydrolysables, ou un seul groupe hydroxyle, les molécules dudit (ou desdits) polydiorganosiloxane(s) étant aptes à réagir entre elles et/ou avec celles d'au moins un agent réticulant de type organosilane, comportant au moins trois groupes condensables ou hydrolysables quand le polydiorganosiloxane est à extrémités hydroxyles et/ou de type polyhydrogénosiloxane, en présence d'un système catalytique comprenant une quantité catalytiquement efficace d'au moins un catalyseur composé d'au moins un métal appartenant au groupe de l'étain, et selon un mécanisme de polycondensation.

2. Composition selon la revendication 1, caractérisée en ce qu'elle comprend un mélange de différents alcools polyvinyliques, de préférence un mélange d'alcool polyvinylique tel que définis dans la revendication 1 (APV$_1$) et d'au moins un alcool polyvinylique (APV$_2$)

   dont l'I.E. est supérieur ou égal à 10 de préférence compris entre 10 et 150, et plus préférentiellement encore entre 15 et 50 et
   dont l'$\eta_{dt}$ est inférieur ou égal à 50 mPa.s, de préférence à 30 mPa.s et plus préférentiellement encore à 10 mPa.s.

3. Composition selon la revendication 1 ou 2, caractérisée en ce que la fraction polyorganosiloxane est constituée par au moins l'une des fractions a, b et c suivantes :

   ▷ la fraction polyorganosiloxane ∗ a ∗ comportant au moins un polydiorganosiloxane portant à chaque extrémité de la chaîne au moins deux groupes condensables ou hydrolysables, ou un seul groupe hydroxyle, les molécules dudit (ou desdits) polydiorganosiloxane(s) étant aptes à réagir entre elles et/ou avec celles d'au moins un agent réticulant de type organosilane, comportant au moins trois groupes condensables ou hydrolysables quand le polydiorganosiloxane est à extrémités hydroxyles et/ou de type polyhydrogénosiloxane, en présence d'un système catalytique comprenant une quantité catalytiquement efficace d'au moins un catalyseur composé d'au moins un métal appartenant au groupe de l'étain, et selon un mécanisme de polycondensation.
   ▷ la fraction polyorganosiloxane ∗ b ∗ formée notamment par au moins un polyorganosiloxane réticulable par voie cationique, grâce à des substituants fonctionnels, de préférence de type époxy et/ou vinyloxy,
   ▷ la fraction polyorganosiloxane ∗ c ∗ formée notamment par :

   - au moins un polyorganosiloxane (**I**) présentant, par molécule, au moins deux groupes alcényles en C$_2$- C$_6$ liés au silicium,
   - au moins un polyorganosiloxane (**II**) présentant, par molécule, au moins trois atomes d'hydrogène liés au silicium,
   - et par un système catalytique comprenant une quantité catalytiquement efficace d'au moins un catalyseur (**III**) composé d'au moins un métal appartenant au groupe du platine,

   ces polyorganosiloxanes étant réticulables par polyaddition.

4. Composition selon l'une quelconque des revendications 1 à 3, caractérisée en ce qu'elle se présente sous forme de dispersion aqueuse réticulable comprenant :

- la fraction polyorganosiloxane constituée par une émulsion du type huile dans eau éventuellement stabilisée par au moins un tensioactif choisi parmi les tensioactifs ioniques ou non et leurs mélanges,
- la fraction polymère hydrosoluble,
- un système catalytique de réticulation,
- éventuellement une charge minérale,
- et éventuellement au moins un agent anti-mousse.

**5.** Composition selon la revendication 4, caractérisée en ce que la proportion d'eau est supérieure ou égale à 50 % en poids, de préférence à 70 % en poids et plus préférentiellement encore à 90 % en poids.

**6.** Système précurseur, au moins bicomposant de la composition selon l'une quelconque des revendications 1 à 5 à l'exclusion de la fraction ∗ b ∗ telle que définie dans la revendication 3 dans lequel les parties réactives réticulables de la composition silicone ne sont pas en présence.

**7.** Application de la composition silicone selon l'une quelconque des revendications 1 à 5 ou du système précurseur selon la revendication 6, pour l'obtention d'un revêtement antiadhérent et imprimable sur un support fibreux ou non, de préférence en papier, ce revêtement étant présent à raison d'au plus 1,00 g de polyorganosiloxane par $m^2$ de support, de préférence d'au plus 0,90 g/$m^2$, et plus préférentiellement encore d'au plus 0,50 g/$m^2$.

**8.** Support fibreux ou non, de préférence en papier, caractérisé en ce qu'il comprend sur au moins une de ses faces un revêtement anti-adhérent et imprimable constitué par la composition silicone selon l'une quelconque des revendications 1 à 5 sous forme réticulée.

**9.** Support selon la revendication 8, caractérisé en ce qu'il comporte le revêtement antiadhérent et imprimable sur l'une de ses faces et un revêtement adhésif sur la face opposée.

**10.** Utilisation d'alcools polyvinyliques tels que définis dans la revendication 1 comme agent d'amélioration de l'imprimabilité d'une composition silicone réticulable ou réticulée destinée à être utilisée pour former un revêtement antiadhérent et imprimable pour supports fibreux ou non.

**Patentansprüche**

**1.** Vernetzbare oder vernetzte Silikonzusammensetzung, die zur Bildung eines antiadhäsiven und bedruckbaren Überzugs für faserartige oder nicht-faserartige Träger verwendet werden kann, von Typ umfassend mindestens ein Polyorganosiloxan und mindestens einen Polyvinylalkohol ($APV_1$) mit einem Esterindex (I.E.) von größer als oder gleich 80, bevorzugt 100 und noch bevorzugter zwischen 120 und 200, dadurch gekennzeichnet,

- daß der $APV_1$ eine Viskosität vom dynamischen Typ ($\eta_{dt}$) von kleiner als 12 mPas und bevorzugt 10 mPas besitzt, wobei $\eta_{dt}$ dem dynamischen Viskositätskoeffizienten einer wässrigen AVP-Lösung von 4 Gew.-%, gemessen bei einer Temperatur von $20 \pm 5°C$ mit einem Ostwald-Viskosimeter, entspricht,
- daß das Trockengewichtsverhältnis der Polyorganosiloxanfraktion zu der APV-Fraktion zwischen 0,5 und 10, bevorzugt zwischen 1 und 5 und noch bevorzugter zwischen 1,5 und 3,5 liegt,

mit der Maßgabe, daß $APV_1$ mit mindestens einem anderen Polyvinylalkohol in dem Fall gemischt wird, in dem die Polyorganosiloxanfraktion mindestens ein Polydiorganosiloxan umfaßt, das an jedem Ende der Kette mindestens zwei kondensierbare oder hydrolysierbare Gruppen oder eine einzige Hydroxylgruppe trägt, wobei die Moleküle des/der Polydiorganosiloxan(e)s so angepaßt sind, daß sie untereinander und/oder mit denjenigen des mindestens einen Vernetzungsmittels vom Organosiloxantyp, das mindestens drei kondensierbare oder hydrolysierbare Gruppen umfaßt, wenn das Polydiorganosiloxan an den Enden Hydroxyle enthält und/oder vom Polyhydrogensiloxantyp ist, in Gegenwart eines katalytischen Systems, das eine katalytisch wirksame Menge mindestens eines Katalysators bestehend aus mindestens einem Metall, das der Zinngruppe angehört, umfaßt, und nach einem Polykondensationsmechanismus reagieren.

**2.** Zusammensetzung nach Anspruch 1, dadurch gekennzeichnet, daß sie ein Gemisch aus verschiedenen Poylyvinylalkoholen, bevorzugt ein Gemisch aus Polyvinylalkohol wie in Anspruch 1 definiert ($APV_1$), und aus mindestens einem Polyvinylalkohol ($APV_2$) umfaßt,

dessen I.E.-Wert größer als oder gleich 10 und bevorzugt zwischen 10 und 150 und noch bevorzugter zwischen 15 und 50 liegt,
dessen $\eta_{dt}$-Wert kleiner als oder gleich 50 mPas, bevorzugt 30 mPas und noch bevorzugter 10 mPas ist.

3. Zusammensetzung nach Anspruch 1 oder 2, dadurch gekennzeichnet, daß die Polyorganosiloxanfraktion aus mindestens einer der folgenden Fraktionen a, b und c besteht:

- die Polyorganosiloxanfraktion *a*, umfassend mindestens ein Polydiorganosiloxan, das an jedem Ende der Kette mindestens zwei kondensierbare oder hydrolysierbare Gruppen oder eine einzelne Hydroxylgruppe trägt, wobei die Moleküle des/der Polydiorganosiloxan(e)s so angepaßt sind, daß sie untereinander und/oder mit denjenigen des mindestens einen Vernetzungsmittels vom Organosiloxantyp, das mindestens drei kondensierbare oder hydrolysierbare Gruppen umfaßt, wenn das Polydiorganosiloxan an den Enden Hydroxyle besitzt und/oder vom Polyhydrogensiloxantyp ist, in Gegenwart eines katalytischen Systems, das eine katalytisch wirksame Menge mindestens eines Katalysators bestehend aus mindestens einem Metal, das der Zinngruppe angehört, umfaßt, und nach einem Polykondensationsmechanismus reagieren,
- die Polyorganosiloxanfraktion *b*, gebildet insbesondere durch mindestens ein dank funktioneller Substituenten, bevorzugt vom Epoxy- und/oder Vinyloxytyp kationisch vernetzbares Polyorganosiloxan,
- die Polyorganosiloxanfraktion *c*, gebildet insbesondere durch

  - mindestens ein Polyorganosiloxan (I), das pro Molekül mindestens zwei an Silizium gebundene $C_2$-$C_6$-Alkenylgruppen trägt,
  - mindestens ein Polyorganosiloxan (II), das pro Molekül mindestens drei an Silizium gebundene Wasserstoffatome trägt,
  - und durch ein katalytisches System, das eine katalytisch wirksame Menge mindestens eines Katalysators (III) aus mindestens einem Metal, das der Platingruppe angehört, umfaßt,

  wobei diese Polyorganosiloxane durch Polyaddition vernetzbar sind.

4. Zusammensetzung nach einem der Ansprüche 1 bis 3, dadurch gekennzeichnet, daß sie in Form einer wässrigen vernetzbaren Dispersion vorliegt, die umfaßt:

- die Polyorganosiloxanfraktion, bestehend aus einer Emulsion des Typs Öl-in-Wasser, gegebenenfalls stabilisiert durch mindestens ein grenzflächenaktives Mittel, ausgewählt aus ionischen oder nicht-ionischen grenzflächenaktiven Mitteln und ihren Gemischen,
- die wasserlösliche Polymerfraktion,
- ein katalytisches Vernetzungssystem,
- gegebenenfalls einen mineralischen Füllstoff,
- und gegebenenfalls mindestens ein Entschäumungsmittel.

5. Zusammensetzung nach Anspruch 4, dadurch gekennzeichnet, daß der Anteil an Wasser größer als oder gleich 50 Gew.-%, bevorzugt 70 Gew.-% und noch bevorzugter 90 Gew.-% ist.

6. Vorläufersystem aus mindestens zwei Komponenten der Zusammensetzung nach einem der Ansprüche 1 bis 5 mit Ausschluß der Fraktion *b* wie in Anspruch 3 definiert, worin die reaktiven vernetzbaren Anteile der Silikonzusammensetzung nicht vorhanden sind.

7. Verwendung der Silikonzusammensetzung nach einem der Ansprüche 1 bis 5 oder des Vorläufersystems nach Anspruch 6 zum Erhalt eines antiadhäsiven und bedruckbaren Überzugs auf einem faserartigen oder nicht-faserartigen Träger, bevorzugt aus Papier, wobei dieser Überzug in einer Menge von höchstens 1,00 g Polyorganosiloxan pro $m^2$ des Trägers, bevorzugt höchstens 0,90 g/$m^2$ und noch bevorzugter höchstens 0,50 g/$m^2$ vorhanden ist.

8. Faserartiger oder nicht-faserartiger Träger, bevorzugt aus Papier, dadurch gekennzeichnet, daß er auf mindestens einer seiner Seiten einen antiadhäsiven und bedruckbaren Überzug, der aus der Silikonzusammensetzung nach einem der Ansprüche 1 bis 5 besteht, in vernetzter Form umfaßt.

9. Träger nach Anspruch 8, dadurch gekennzeichnet, daß er den antiadhäsiven und bedruckbaren Überzug auf einer seiner Seiten und einen adhäsiven Überzug auf der gegenüberliegenden Seite trägt.

**10.** Verwendung von Polyvinylalkoholen wie in Anspruch 1 definiert als Mittel zur Verbesserung der Bedruckbarkeit einer vernetzbaren oder vernetzten Silikonzusammensetzung, die zur Verwendung zur Bildung eines antiadhäsiven und bedruckbaren Überzugs für faserartige oder nicht faserartige Träger bestimmt ist.

**Claims**

**1.** Cross-linkable or crosslinked silicone composition capable of being employed for forming an abherent and printable coating for fibrous or other supports, of the type of those including at least one polyorganosiloxane and at least one polyvinyl alcohol (PVA.$_1$) which has an ester value (E.V.) higher than or equal to 80, preferably 100 and still more preferably between 120 and 200,
characterized

- in that this PVA.$_1$ exhibits a standard dynamic viscosity ($\eta_{dt}$) lower than 12 mPa s and preferably lower than 10 mPa s, corresponding to the dynamic viscosity coefficient of an aqueous solution of PVA at a concentration of 4% by weight, measured at a temperature of 20..+/-.5. °C , with the aid of a Ostwald viscometer,
- and in that the dry weight ratio of the polyorganosiloxane fraction to the PVA fraction is established between 0.5 and 10, preferably between 1 and 5 and still more preferably between 1.5 and 3.5,

with the condition according to which the PVA.$_1$ is mixed with at least one other polyvinyl alcohol in the case where the polyorganosiloxane fraction contains at least one polydiorganosiloxane carrying at each end of the chain at least two condensable or hydrolysable groups or a single hydroxyl group, the molecules of the said polydiorganosiloxane(s) being capable of reacting with each other and/or with those of at least one crosslinking agent of organosilane type, containing at least three condensable or hydrolysable groups when the polydiorganosiloxane is at hydroxyl ends and/or of polyhydrosiloxane type, in the presence of a catalyst system including a catalytically effective quantity of at least one catalyst composed of at least one metal belonging to the tin group, and according to a polycondensation mechanism.

**2.** Composition according to claim 1 , characterized in that it contains a mixture of different polyvinyl alcohols, preferably a mixture of polyvinyl alcohols as defined in claim 1 (PVA.$_1$) and of at least one polyvinylalcohol (PVA.$_2$) , whose E.V. is higher than or equal to 10, preferably between 10 and 150 and still more preferably between 15 and 50, and whose . $\eta_{dt}$ is lower than or equal to 50 mPa s, preferably 30 mPa s and still more preferably 10 mPa.s.

**3.** Composition according to claim 1 or 2 , characterized in that the the polyorganosiloxane fraction consists of at least one of the following fractions :

- the polyorganosiloxane fraction *a* comprising at least one polydiorganosiloxane carrying at each end of the chain at least two condensable or hydrolysable groups or a single hydroxyl group, the molecules of the said polydiorganosiloxane(s) being capable of reacting with each other and/or with those of at least one crosslinking agent of organosiloxane type containing at least three condensable or hydrolysable groups when the polydiorganosiloxane has hydroxyl ends and/or of polyhydrosiloxane type, in the presence of a catalyst system including a catalytically effective quantity of at least one catalyst composed of at least one metal belonging to the tin group, and according to a polycondensation mechanism.
- the polyorganosiloxane fraction *b* consists especially of at least one polyorganosiloxane which is cationically crosslinkable by virtue of functional substituents, preferably of epoxy and/or vinyloxy type.
- the polyorganosiloxane fraction *c*, consisting especially of:

  - at least one polyorganosiloxane (I) containing, per molecule, at least two $C_2$ -$C_6$ alkenyl groups bonded to silicon,
  - at least one polyorganosiloxane (II) containing, per molecule, at least three hydrogen atoms bonded to silicon, and
  - .by a catalyst system including a catalytically effective quantity of at least one catalyst (III) consisting of at least one metal belonging to the platinum group,

  these polyorganosiloxanes being crosslinkable by polyaddition.

**4.** Composition according to any one of claims 1 to 3 , characterized in that it is in the form of a crosslinkable aqueous dispersion including:

**EP 0 686 679 B1**

- • -the polyorganosiloxane fraction consisting of an emulsion of the oil-in-water type, optionally stabilized with at least one surfactant chosen from ionic or nonionic surfactants and mixtures thereof, *
- • the water-soluble polymer fraction,
- • a catalyst system for crosslinking,
- • optionally an inorganic filler, and
- • -optionally at least one antifoaming agent.

5. Composition according to claim 4 the proportion of water is higher than or equal to 50% by weight, preferably 70% by weight and still more preferably 90% by weight.

6. An at least two-component precursor system of the elastomer silicone composition according to any of claims 1 to 5 , with the exclusion of fraction*b*as defined in claim 3 , in which the crosslinkable reactive parts of the silicone composition are not present.

7. Application of the silicone composition according to any one of claims 1 to 5 or of the precursor system according to claim 6 for obtaining an abherent and printable coating on a fibrous or other support, preferably made of paper, this coating being present in a proportion of not more than 1.00 g of polyorganosiloxane per m.$^2$ of support, preferably not more than 0.90 g/ m.$^2$ and still more preferably not more than 0.50 g/ m.$^2$.

8. Fibrous or other support , preferably made of paper , characterized in that it includes , on at least one of its face , an abherent and printable coating consisting of the silicone composition according to any one of claims 1 to 5, in crosslinked form.

9. Support according to claim 8, characterized in that it comprises the abherent and printable coating on at least one of its face , and an adhesive coating on the opposite face.

10. Use of polyvinylalcohols , as defined in claim 1, as agents for improving the printability of a crosslinkable or crosslinked silicone composition intended to be employed for forming an abherent and printable coating for fibrous or other supports .

FIG.1

FIG. 2

FIG. 3